# EUROPEAN PATENT APPLICATION

(11) **EP 4 120 195 A1**
(43) Date of publication of application: **18.01.2023**
(21) Application number: 21186162.0
(22) Date of filing: 16.07.2021
(51) Int. Cl.: G06T 7/80

(54) **A METHOD, A COMPUTER PROGRAM AND A SYSTEM FOR CALIBRATING AT LEAST ONE CAMERA**

(71) Applicant: Carl Zeiss Vision International GmbH, 73430 Aalen (DE)
(72) Inventor: Kumar, Deepu, 89551 Königsbronn (DE); Zhang, Min, 89231 Neu-Ulm (DE); Glasenapp, Carsten, 73447 Oberkochen (DE)
(74) Representative: Altmann Stößel Dick Patentanwälte PartG mbB

(57) **Abstract**

The present invention relates to a method (210), a computer program and a system (110) for calibrating at least one camera (112). Herein, the method (210) comprises the following steps:
a) identifying (214) at least one object (124, 124', 124") in at least one image (122) captured by the at least one camera (112);
b) determining (216, 218)
- first information about at least one feature appearing in the at least one image (122); and
- second information about at least one parameter associated with the at least one object (124, 124', 124");
and
c) calibrating (222) the at least one camera (112) by using the first information and the second information,
wherein the second information is acquired by scanning at least one existing database for the at least one parameter associated with the at least one object (124, 124', 124").

## Description

### Field of the invention

The present invention relates to a method, a computer program and a system for calibrating at least one camera.

### Related art

Using a camera to measure the dimensions of an object in world units with precision, generally, requires a correspondence between 3D world positions and corresponding 2D image positions. Such a kind of correspondence can be described by using a camera projection matrix. In order to obtain the camera projection matrix, at least one object having at least one known dimension, such as at least one checkerboard pattern, is, usually, placed in a field of view of the camera. In a similar fashion, the camera can be calibrated to achieve a correspondence between a surface attribute, such as a texture, a color, or a polarization, of the object in the 3D world and the same surface attribute corresponding in the 2D image.

US 2013/0114861 A1 discloses a recognition device and method capable of recognizing 3D position and orientation of an article at low calculation cost. A 2D image of a region, where articles are randomly located, is obtained by a camera, and 3D information of generally the same region is obtained by a range sensor. A space, where an article to be taken out is considered to exist, is roughly limited. Based on the limited space, a search condition for searching the article by 2D image processing is set, and 2D positional information on the image of the article is obtained. Then, 3D point data used to recognize the 3D position and orientation of the article is selected, and a view line in the 3D space, extending from the camera to the article, is calculated, whereby the 3D position and orientation of the article is calculated.

US 2017/0287166 A1 discloses calibration methods which use a calibration target for obtaining the intrinsic and extrinsic camera parameters of one or more cameras. The methods can include acquiring, with each camera, a sequence of target images representing the calibration target in different target poses and at different acquisition times. The methods can include identifying reference images from the target images, and defining volume bins, angle bins and multi-camera bins into which the reference images are stored. The reference images can be used to determine the intrinsic and extrinsic parameters of the one or more cameras. In some implementations, the calibration methods can enable a user to monitor the progress of the calibration process, for example by providing an interactive calibration target including an input/output user interface to guide the user in real-time during the acquisition of the target images and/or sensors to provide positional information about the target poses.

US 2013/0169822 A1 discloses methods, systems, computer readable media and other implementations, including a method to calibrate a camera that includes capturing by the camera a frame of a scene, identifying features appearing in the captured frame, the features associated with pre-determined values representative of physical attributes of one or more objects, and determining parameters of the camera based on the identified features appearing in the captured frame and the pre-determined values associated with the identified features.

### Problem to be solved

In particular based on the disclosure of US 2013/0169822 A1, it is therefore an objective of the present invention to provide a method, a computer program and a system for calibrating at least one camera which at least partially overcome the above-mentioned problems of the state of the art.

It would, particularly, be desirable to directly determine at least one dimension of at least one object being located in a field of view of the camera with little effort and equipment in order to derive the camera projection matrix in a highly precise manner.

In a similar fashion, it would be desirable to calibrate the camera to achieve a correspondence between a surface attribute, such as a texture, a color, or a polarization, of the object in the 3D world and the same surface attribute corresponding in the 2D image with little effort and equipment also in a highly precise manner.

### Summary of the invention

This problem is solved by a method, a computer program and a system for calibrating at least one camera having the features of the independent claims. Preferred embodiments, which can be implemented in an isolated fashion or in any arbitrary combination, are listed in the dependent claims or throughout the specification.

In a first aspect, the present invention relates to a method for calibrating at least one camera, wherein the method comprises the following steps:
a) identifying at least one object in at least one image captured by the at least one camera;
b) determining
   - first information about at least one feature appearing in the at least one image; and
   - second information about at least one parameter associated with the at least one object; and
c) calibrating the at least one camera by using the first information and the second information,
wherein the second information is acquired by scanning at least one existing database for the at least one parameter associated with the at least one object.

Herein, the indicated steps may, in a particularly preferred embodiment, be performed in the given order, commencing with step a), continuing with step b) and, subsequently, with step c). However, as long as appropriate, any or all of the indicated steps may also be repeated several times and/or performed concurrently at least in part. In addition, the method may further comprise at least one additional step, whether disclosed herein, such as step d) as described below in more detail, or not.

In a preferred embodiment, the method according to the present invention can be a computer-implemented method. As generally used, the term "computer-implemented method" refers to a method which involves at least one processing device, particularly selected from a computer, a computer network, a readable medium or a mobile communication device, carrying a program, whereby at least one of the steps of the method, specifically at least one of steps a) to c), are performed by using at least one computer program. Alternatively, the at least one computer program may be accessible by at least one external processing device which may be adapted for performing the method via a network, such as an in-house network or the internet. With particular regard to the present invention, the present method can, thus, being performed on the at least one processing device which is configured for this purpose, such as by providing a computer program which is configured for such a purpose.

As used herein, the term "camera" refers to a device which is adapted for generating at least one image of at least one object, wherein the at least one object is being placed in a field of view of the camera. As generally used, the term "image" relates to at least one two-dimensional representation of the at least one object as captured by the at least one camera, wherein the two-dimensional representation comprises a plurality of elements which are denoted as "picture elements" or "pixels". For a purpose of generating the at least one image, the at least one camera, in general, comprises an optical system having at last one optical element and a plurality of light-sensitive elements which are adapted to provide a plurality of electrical signals, preferably of digital electrical signals, which may indicate a property of illumination, specifically at least one of an intensity, a wavelength, or a polarization, of each light-sensitive element. As a result, at least one value assigned to each picture element in the at least one image of the at least one object is related to the electrical signal as generated by the at least one particular light-sensitive element. Herein, the optical system may, preferably, operate in the visual spectral range extending from 380 nm to 760 nm; however, using at least one light-sensitive element which may, alternatively or in addition, operate in at least one of the infrared spectral range extending from 760 nm to 1000 µm, especially from 760 nm to 15 µm, or in the ultraviolet spectral range extending from 1 nm to 380 nm, especially from 100 nm to 380 nm, may also be feasible.

The at least one camera may form a digital camera or may be part of a digital camera. Further, the at least one camera may be a stationary device or a mobile device. Further, the at least one camera may be a stand-alone device or may form part of another device, such as a mobile communication device, a computer, or a vehicle; however, a further device may also be conceivable. Further, the at least one camera may be a hand-held device. However, other embodiments of the at least one camera are may also be feasible. In general, the at least one camera may be adapted for capturing at least one of a single image, such as a single digital image, or a plurality of images, such as a sequence of images, specifically digital video sequences. The at least one camera may, preferably, comprise at least one storage device configured to store the at least one image or the at least one image sequence. Further, the at least one camera may, preferably, comprise at least one communication interface, especially a wireless interface and/or a wire-bound interface, configured to provide access to the at least one image for a further device or to provide the at least one image to a further device.

As further used herein, the term "calibrating" or any grammatical variation thereof refers to a process of adjusting at least one feature associated with the at least one object that is located in a field of view of the at least one camera of which at least one image is taken by the at least one camera to at least one parameter associated with the at least one object as determined from the at least one image. In particular, calibrating the at least one camera may comprise comparing at least one value of at least one picture element associated with the at least one feature appearing in the at least one image with at least one parameter associated with the at least one object identified in at least one image. As used herein for this purpose, the term "feature" refers to the at least one value or to at least one range of values associated with at least one picture element as comprised by the at least one image. By way of example, the feature may indicate an intensity, a color, or a polarization of a single picture element. As a further example, the feature may indicate a geometric extension, such as a length of at least one edge of the at least one object, as specified by a plurality of particular picture elements within a particular image.

As further used herein, the term "parameter" refers to at least one optically detectable property of the at least one object which is located in the field of view of the at least one camera in order to capture at least one image of the at least one object. Herein, the at least one optically detectable property may, preferably, be specified by using at least one value for the at least one parameter associated with the at least one object. In particular, the at least one parameter associated with the at least one object may be selected from a geometric extension and/or a surface attribute associated with the at least one object. As generally used, the term "geometric extension" refers to a spatial extension of the at least one object or a portion thereof. Specifically, the at least one geometric extension may be selected from the group consisting of a length, a width, a height, a diameter, a circumference, and an area; however, a further spatial extension associated with the at least one object or a portion thereof may also be conceivable.

As further generally used, the term "surface attribute" refers to a visual appearance of at least one surface of the at least one object or a portion thereof, in particular, generated by reflectance and/or scattering of incident light on the at least one surface. Specifically, the at least one surface attribute may be selected from the group consisting of a texture, a color, and a polarization. As further used herein, the term "texture" relates to a structure of at least one surface as captured by at least one image of the at least one object or the portion thereof. In particular, the texture may refer to a distribution of at least two different types of picture elements, such as "black" and "white, within the at least one surface. Herein, the at least two different types of picture elements, such as "black" and "white, may be distributed in a manner within the at least one surface that a so-denoted "gray shade" may result. As further used herein, the term "color" relates to a wavelength of the illumination as captured by a particular picture element. Similarly, the term "polarization" refers to an orientation of the light waves in the illumination as captured by a particular picture element.

In preferred embodiment, the at least one parameter associated with the at least one object may be the geometric extension, especially the length, of at least one edge of the at least one object. In a further preferred embodiment, the at least one parameter associated with the at least one object may be the geometric extension and/or the surface attribute of at least one element located on a surface of the at least one object, or a distance between at least two elements located on the surface of the at least one object. Herein, the at least one element located on the surface of the at least one object may, preferably, be at least one label and/or at least one marking; however, a further kind of element that may be located on the surface of the at least one object may also be feasible.

In a particular embodiment, the at least one of a label or a marking may, especially, be selected from a serial number, a product identification code or a barcode. As generally used, the term "barcode" refers to a machine-readable representation of data which are assigned to the object by placing the barcode on at least one surface of the object. Specifically, the barcode may be a "linear barcode", which represents the data by varying a width and a spacing of parallel lines, a "two-dimensional barcode" which represents data within an arrangement of bars, rectangles, squares, hexagons, or any other geometric pattern being distributed over a limited two-dimensional area, such as a data matrix barcode a QR barcode, or a "dot code" which comprises a specific number of dots distributed again over a limited two-dimensional area. However, other types of barcodes may also be feasible.

By way of example, the surface of the at least one object may carry at least one of a label or a marking, such as a barcode, having at least one of a definite area, a definite side length, a definite gray shade or a definite color. Herein, the color may be defined by using a wavelength, such as a value in nm, µm or wavenumbers, or, preferably, by using known color code information based on a known color code, such as a CSS or a HTML color code, or at least one color model, such as a RGB, a HSL, a HSV or a CMYK color model. However, further types of color code information may also be feasible. As a further example, the surface of the at least one object may exhibit at least two different marking elements having a definite distance between the at least two marking elements. In addition, various further examples are conceivable.

In a still further preferred embodiment, the at least one parameter associated with the at least one object may be the geometric extension and/or the surface attribute of at least one part comprised by the at least one object, or a distance between at least two parts comprised by the at least one object. Herein, the at least one part comprised by the at least one object may, preferably, be selected from the group consisting of a fixing element, a groove, and a protrusion; however, a further kind of part that may be located on the surface of the at least one object may also be feasible. By way of example, at least two screws may be used to assemble at least two parts which may constitute the object, wherein a diameter of the at least two screws and/or a distance between two of the at least two screws may be defined. As a further example, a length and/or a distance between two slits on the surface of the object may be defined. In addition, various further examples are conceivable.

According to step a), at least one object is identified in the at least one image as captured by the at least one camera. As used herein, the term "capturing" or any grammatical variation thereof refers to a process of generating a plurality of picture elements which jointly form the at least one image of the at least one object, wherein each picture element constitutes a representation of a respective portion of the at least one object, in particular depending on at least one operational parameter of the at least one camera as set during capturing the at least one image. As used herein, the term "operational parameter" refers to at least one setting of the at least one camera as assumed by the at least one camera during capturing the at least one image. Specifically, the at least one operational parameter can be individually set for each picture element or, alternatively or in addition, be globally set for the at least one camera, especially depending on a nature of the at least one operational parameter. In particular, the at least one operational parameter may, especially, be selected from at least one of a focal length, an exposure, a dark level, a saturation, a contrast, an intensity gradient, spectral sensitivity, an optical axis, a distortion, or a point spread function. However, a further kind of operational parameter may also be feasible.

In a particularly preferred embodiment, the method according to the present invention may comprise a further step of
d) capturing the at least one image picturing the at least one object by using the at least one camera.

Herein, step d) may, specifically, be performed prior to step a), thus, providing the at least one image which can be used in step a) for identifying at least one object. Alternatively or in addition, the at least one image as used in step a) for identifying the at least one object can be retrieved from at least one existing database, which may comprise a plurality of images that have previously been captured by the at least one camera using known operational parameters.

As further used herein, the term "identifying" or any grammatical variation thereof refers to a process of reconstructing the at least one object or a portion thereof as captured by the at least one camera within the at least one image. For this purpose, at least one method of image processing may be applied to the at least one image. As generally used, the term "image processing" refers to extracting at least one feature as defined above from the at least one image. As used herein, the term "extracting" or any grammatical variation thereof refers to a process of generating at least one item or at least one parameter related to the at least one item from at least one image or at least one model of at least one object. For a purpose of extracting the at least one feature from the at least one image, at least one known method of image processing may be used, in particular feature extraction or feature matching. In particular depending on the kind of operational parameter, at least one of extraction or matching of an intensity, a gradient, a color, an exposure, a saturation, or an image pixel information may be used. Alternatively or in addition, an iterative fitting to at least one physical model and/or a template matching, which may, especially, be invariant on scale and orientation, can be used here. Alternatively or in addition, a text recognition algorithm, specifically by using an optical character recognition algorithm, also abbreviated to "OCR", can be used. Further, especially for a purpose of extracting at least one barcode as described above, a known algorithm for barcode reading can be used.

Extracting the at least one feature may be performed in accordance with a predefined scheme, however, artificial intelligence, in particular machine learning, may also be applied, especially by using a neuronal network. As generally used, the term "machine learning" refers to a process of applying artificial intelligence to automatically generate a statistical model for classification or regression. A machine learning algorithm configured to generate the desired model based on a large number of training data sets can, preferably, be used. Herein, the machine learning algorithm can be a supervised algorithm or a self-learning algorithm and/or can use and/or comprise a neural network, which may, preferably, be developed into a trained neural network by using the at least one training data set. However, using a further type of machine learning may also be feasible.

According to step b),
- first information about the at least one feature appearing in the at least one image; and
- second information about the at least one parameter associated with the at least one object
is determined. As used herein, the terms "first" and "second" are considered as description without specifying an order and without excluding that kinds of information may further be present.

As used herein, the term "first information" refers to at least one first characteristic value related to at least one feature appearing in the at least one image. As already indicated above, the at least one feature may, preferably, refer to an intensity, a color, or a polarization of at least one picture element and/or to a geometric extension as specified by a plurality of particular picture elements. In particular, determining the first information about the at least one feature appearing in the at least one image may comprise estimating at least one value of at least one picture element associated with the at least one feature.

As further used herein, the term "second information" refers to at least one second characteristic value related to at least one parameter associated with the at least one object. As already indicated above, the at least one parameter may, preferably, refer to a geometric extension and/or a surface attribute associated with the at least one object.

In accordance with the present invention, the second information is acquired by scanning at least one existing database for the at least one parameter associated with the at least one object, preferably, by using at least one existing search application, preferably an in-house search application or a known internet search engine. As used herein, the term "database" refers to an electronically accessible collection of a plurality of data values related to at least particular kind of information, wherein access to the plurality of the data values is provided upon request. As further used herein, the term "existing" relates to a particular kind of database which is already available at a point in time in which the second information is determined. Herein, the at least one existing database may, preferably, be stored by at least one storage device. As generally used, the term "storage device" refers to an electronic device which is configured to store the plurality of the data values and to provide at least one of the data values upon request by a further electronic device configured for such a purpose. Preferably, the at least one storage device may be located on at least one of the at least one camera or a remote location. As used herein, the term "remote location" indicates that the at least one existing database is located outside the at least one camera. In general, the at least one storage device may be accessible via at least one network, wherein at least one network may be selected from at least one of an in-house network or the internet. As further used herein, the term "internet search engine" refers to a particular kind of search application which is available in the internet, such as Google, Google Lens, Bing, DuckDuckGo, Yahoo, Amazon, or Facebook; however, using a further type of internet search engine, may also be feasible. For further examples concerning available internet search engines, reference can be made to https://en.wikipedia.org/wiki/List_of_search_engines.

In a particular embodiment, at least one of a serial number, a product identification code or a barcode that may be comprised by at least one of a label or a marking located on the surface of the at least one object can, preferably, be used for acquiring the second information when scanning the at least one existing database for the at least one parameter associated with the at least one object. Herein, the at least one of the serial number, the product identification code or the barcode can, advantageously, be used for identifying the at least one object, especially by providing a definite relationship between the at least one object and located in front of the at least one camera and at least one item of information in the at least one existing database carrying the desired second information about the at least one object.

The second information about the at least one parameter associated with the at least one object uses data is already accessible at the point in time in which the at least one second characteristic value related to the at least one parameter associated with the at least one object is required. By way of example, for acquiring the second information about the length of an edge of a particular object, such as a common pen, a household battery, or a cuboid packing comprising sweets, may retrieved from an existing database in which a value for the length of the edge of the particular object may already be stored. As a further example, diameter and/or distance between two screws assembling two parts of an electronic device or length and/or distance between two slits on the surface of the electronic device may be retrieved from an existing database comprising this kind of information.

As a particular result thereof, the second information about the at least one parameter associated with the at least one object can, in a preferential fashion, be determined from an exact value for the at least one parameter associated with the at least one object, thus, contributing to an increased accuracy of the calibrating of the at least one camera. It is emphasized here that such a kind of procedure according to the present invention is in particular contrast to US 2013/0169822 A1 in which estimated average values for the at least one object are used for such a purpose, such as an average height for an person adult person of 1.75 m, or average lengths for cars, such as 5000 mm for a sedan or 6000 mm for an SUV. In contrast hereto, the present invention comprises acquiring the second information from an existing database comprising information about geometric extension, such as the length, for the particular sedan as identified in the at least one image to be rather 4875 mm, thus, resulting in a considerably increased accuracy of the calibration.

In a particularly preferred embodiment, the determining of the second information according to step b) may comprise generating at least one model of the at least one object or a portion thereof, wherein the at least one model of the at least one object based on the at least one parameter associated with the at least one object. As used herein, the term "generating" or any grammatical variation thereof refers to a process of providing a model related to the at least one object or to a selected portion thereof, such as to at least one part of the at least one object and/or to at least one element located on the surface of the at least one object, wherein the model is based on data related to the at least one object or to the selected portion thereof.

Preferably, generating the at least one model of the at least one object or the selected portion thereof may comprise extracting the at least one parameter from the at least one object or the selected portion thereof. For the term "extracting" reference may be made to the definition above.

As further used herein, the term "model" refers to a simulation of the at least one object which is configured to provide a representation of at least the at least one object or a selected portion thereof in a numerical fashion, specifically to be processed by using at least one processing device as described below in more detail. In a particularly preferred embodiment, the model may be a construction model of the at least one object, wherein the at least one existing database may comprise construction information related to the at least one object, wherein the construction information may comprises at least one value for at least one parameter associated with the at least one object. By way of example, the object may be an electronic device having four identical screws assembling two parts of the electronic device, wherein the diameter of the screws and the distance between the screws are comprised by the construction information related to the electronic device used as the at least one object for calibrating the at least one camera. As a further example, the construction information related to the electronic device may further comprise the lengths and the distances between a plurality of parallel slits provided on the surface of the electronic device. As a further device, the construction information related to the electronic device may further comprise the length and the width in mm and the color in RGB values of a label affixed to the surface of the electronic device for identification. Various further examples are conceivable.

According to step c), the at last one camera is calibrated by using the first information and the second information as determined according to step b). For a definition of the terms "calibrating", "first information", and "second information", reference can be made to the definitions as provided above. As a result, thereof, calibration information may be generated and, preferably, stored in at least one storage device, especially in at least one storage device as comprised by the at least one camera.

In particular, calibrating the at least one camera may comprise comparing the first information with the second information. As used herein, the term "comparing" or any grammatical variation thereof refers to a process of generating a relationship between the first information, i.e. the at least one first characteristic value related to the at least one feature appearing in the at least one image, and the second information, i.e. the at least one second characteristic value related to at least one parameter associated with the at least one object.

In a particularly preferred embodiment, calibrating the at least one camera may comprise comparing a number of adjacent picture elements associated with the at least one feature appearing in the at least one image with the at least one geometric extension associated with the at least one object as identified in at least one image. By way of example, the first characteristic value related to a particular feature appearing in the at least one image may be a number of adjacent picture elements which constitute the particular feature while the at least one second characteristic value may be a length of an edge of a particular object as identified in the at least one image. By comparing the number of the adjacent picture elements in the at least one image with the length of the edge of the particular object as retrieved from an existing database, a correspondence between 3D world positions as determined for the particular object and the corresponding 2D image positions as determined for the particular feature in the at least one image can be obtained. By using this result, a camera projection matrix can be derived. As generally used, the term "camera projection matrix" describes the correspondence between 3D world positions and the corresponding 2D image positions. In particular, the at least one parameter associated with the at least one object can be configured to consider at least one distortion of the at least one object in the at least one image, specifically by using repeated results. Herein, the camera projection matrix may consider at least one of a radial or a tangential lens distortion occurring in the at least one camera, especially due to optical components as comprised by the at least one camera. In an alternative embodiment, the camera projection matrix can disregard any distortion of the at least one object in the at least one image, especially in case of a pinhole camera.

In a further preferred embodiment, calibrating the at least one camera may comprise comparing a value of at least one adjacent picture element associated with the at least one feature appearing in the at least one image with the at least one surface attribute associated with the at least one object as identified in at least one image. As defined above, the at least one surface attribute may refer to a texture, a color, or a polarization of the surface of the at least one object. As a further example, the first characteristic value related to the at least one feature appearing in the at least one image may indicate a color of one or more adjacent picture elements while the at least one second characteristic value may be an RGB value of a label as comprised by at least one object. Alternatively or in addition, the first characteristic value related to the at least one feature appearing in the at least one image may indicate a distribution of at least two different types of picture elements, such as "black" and "white, within a plurality of adjacent picture elements while the at least one second characteristic value may be a texture, such as a gray shade, of a label as comprised by at least one object. By comparing the distribution of the at least two different types of picture elements within the plurality of the adjacent picture elements in the at least one image with the texture, such as a gray shade, of a particular label as affixed to the particular object as retrieved from an existing database, a correspondence between a 3D world visual appearance as determined for the particular object and the corresponding 2D visual appearance in at least one image can be obtained. By using this result, a spectral behavior and a gradation of the optical system as comprised by the at least one camera can be calibrated, alternatively or in addition.

In a particular embodiment, the steps of the method for calibrating at least one camera may repeated by using at least one further object in at least one image captured by the at least one camera. For this purpose, at least one further image of the at least one object may, alternatively or in addition, be captured. As a further alternative or still in addition, at least one further field of view may be assumed for capturing at least one further image. Repeating the steps of the method for calibrating of the at least one camera may, preferably, result in an increase of the accuracy of the calibrating method.

In a particular embodiment, at least one filter can be used for determining a geometric extension associated with the at least one object in at least one image captured by the at least one camera. Specifically, at least one feature appearing in the at least one image can be matched by using information for at least one of constructing, adjusting, or updating an environment of the feature, thereby desiring a tracking of the at least one feature using at least one filter, such as Kalman filter. The at least one filter can, particularly, be used in a framework of an existing technology, such as Simultaneous Localization And Mapping (SLAM), robotic navigation, or robotic mapping. However, further types of filters and/or further kinds of applications of the at least one filter may also be feasible.

In a further aspect, the present invention refers to a computer program for calibrating at least one camera, wherein the computer program comprises instructions which, when the computer program is executed by a computer, cause the computer to carry out the method according to the present invention. For this purpose, a computer program may comprise instructions provided by using a computer program code which may be capable of performing any or all of the steps of the method and, thus, establish the reproducing of a pair of spectacle lenses for a spectacle frame when executed on a computer. The computer program code may be provided by at least one storage device as located on the computer, or via a network, such as an in-house network or the internet. For further details concerning the computer program, reference may be made to the description of the method for calibrating at least one camera as disclosed elsewhere herein.

**In** a further aspect, the present invention refers to a system for calibrating at least one camera. As generally used, the term "system" refers to a combination of at least two components each of which is configured to perform a particular task, wherein the at least two components may cooperate and/or interact with each other in order to achieve the desired task. Herein, the two at least two components may form an assembly or may be placed on at least two different locations. For the terms "calibrating" and "camera", reference can be made to the definitions as provided above.

According to the present invention, the system for calibrating at least one camera comprises:
- at least one camera, wherein the at least one camera is configured to capture at least one image picturing at least one object; and
- at least one processing device, wherein the at least one processing device is configured to:
   ∘ determine
      ▪ first information about at least one feature appearing in the at least one image; and
      ▪ second information about at least one parameter associated with the at least one object; and
   ∘ calibrate the at least one camera by using the first information and the second information,
wherein the at least one processing device is further configured to acquire the second information by scanning at least one existing database for the at least one parameter associated with the at least one object.

In a preferred embodiment, the system may, further, comprise at least one storage device which may be configured to store a plurality of the data values and to provide at least one of the data values upon request by a further electronic device configured for such a purpose. In particular, the at least one storage device may be configured to store the at least one existing database; however, the at least one storage device may be configured to store further data values, especially at least one of an image, an image sequence, the first information, the second information, calibration information, or a computer program code configured to perform the method for calibrating at least one camera.

In a further preferred embodiment, the system may, further, comprise at least one communication interface, especially a wire-bound interface and/or, preferably, a wireless interface, which may be configured to provide access to the at least one existing database, in particular in an embodiment in which the at least one existing database may an external database which may be located in at least one remote location. In addition, the at least one communication interface may be configured to provide access to at least one of an image or an image sequence which may, further, be stored on an external database.

In a further preferred embodiment, the system may, further, comprise at least one screen which may be configured to display at least one item of information. In particular, the at least one item of information may be selected from at least one of an image, an image sequence, the first information, the second information, or the calibration information. However, the screen may, alternatively or in addition, be configured to display a further kind of information.

In a further preferred embodiment, the system may, further, comprise at least one distance meter which may be configured to determine at least one distance, specifically at least one distance between the at least one camera and the at least one object.

In a further preferred embodiment, the system may, further, comprise a holding unit which may be configured to hold the at least one camera. Herein, the holding unit may be a permanent holding unit or a temporary holding unit designed for such a purpose.

In a further preferred embodiment, the at least one camera may fully or partially comprise at least one of the processing device, the storage device, the communication interface, the screen, or the distance meter.

In a still further preferred embodiment, the at least one camera may be comprised by a mobile communication device. Herein, the at least one camera may, preferably, be selected from at least one rear camera and/or at least one front camera comprised by the mobile communication device. As generally used, the term "mobile communication device" refers to at least one of a smartphone, a tablet, a personal digital assistant, or a laptop, which can be carried by a person and, can thus, move together with the person. However, further kinds of mobile communication devices may also be conceivable. In general, the at least one mobile communication device may comprise the at least one processing device and at least one communication interface configured to provide access to the at least one existing database. A mobile operating system running on the at least one mobile communication device may be configured to facilitate a use of software, such as the computer program code capable of performing the method for calibrating at least one camera, multimedia functionalities, and communication facilities, such as internet or at least one wireless communications protocol, such as Wi-Fi or Bluetooth.

For further details concerning the computer program and the system for calibrating at least one camera, reference can be made to the method for calibrating at least one camera as described elsewhere herein.

The method, computer program and system for calibrating at least one camera, specifically, allow determining at least one of a geometric extension and/or a surface attribute of at least one object placed in the field of view of the at least one camera's in a directly fashion, especially by using a detect and search approach by which the at least one object can be identified, preferably, by using at least one known method of image processing, wherein the desired information about the at least one parameter, specifically the geometric extension and/or the surface attribute, of at least one object can be acquired in a direct fashion from an already existing database, in particular a general internet database, or a proprietary database, specifically generated by a manufacturer or provider of the at least once camera, preferably, by using existing search applications, preferably a known internet search engine.

In this fashion, the at last one calibrated camera can be used to correct at least one of a lens distortion in the optical system of the camera or a positioning of the camera, and to measure the geometric extension and/or a surface attribute of at least one object in world units. Further possible applications include a determining of a depth and/or an estimation of 3D structures.

With respect to the prior art, the method, computer program and system for calibrating at least one camera exhibit the following advantages. In particular, they allow directly determining at least one dimension of at least one object being located in a field of view of the camera with little effort and equipment in order to derive the camera projection matrix in a highly precise manner. In a similar fashion, they allow calibrating the camera to achieve a correspondence between a surface attribute, such as a texture, a color, or a polarization, of the object in the 3D world and the same surface attribute corresponding in the 2D image with little effort and equipment also in a highly precise manner.

As used herein, the terms "have", "comprise" or "include" or any arbitrary grammatical variation thereof are used in a non-exclusive way. Thus, these terms may refer to both a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

As further used herein, the terms "preferably", "more preferably", "particularly", "more particularly", or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in this way with other features of the invention.

Summarizing, the following Embodiments are, particularly, preferred within the scope of the present invention:
Embodiment 1: A method for calibrating at least one camera, the method comprising the following steps:
   a) identifying at least one object in at least one image captured by the at least one camera;
   b) determining
      - first information about at least one feature appearing in the at least one image; and
      - second information about at least one parameter associated with the at least one object; and
   c) calibrating the at least one camera by using the first information and the second information,
   wherein the second information is acquired by scanning at least one existing database for the at least one parameter associated with the at least one object.
Embodiment 2: The method according to the preceding Embodiment, wherein determining the second information about the at least one parameter associated with the at least one object comprises generating at least one model of the at least one object, wherein the at least one model of the at least one object comprises the at least one parameter associated with the at least one object.
Embodiment 3: The method according to the preceding Embodiment, wherein generating the at least one model of the at least one object comprises extracting the at least one parameter from the at least one object.
Embodiment 4: The method according to any one of the preceding Embodiments, wherein the second information about the at least one parameter associated with the at least one object comprises an exact value for the at least one parameter.
Embodiment 5: The method according to any one of the preceding Embodiments, wherein the at least one parameter associated with the at least one object is configured
   - to consider; or
   - to disregard
   at least one distortion of the at least one object in the at least one image.
Embodiment 6: The method according to any one of the preceding Embodiments, wherein the at least one parameter associated with the at least one object is selected from at least one of:
   - a geometric extension; or
   - a surface attribute
   associated with the at least one object.
Embodiment 7: The method according to the preceding Embodiment, wherein the at least one geometric extension is selected from at least one of:
   - a length;
   - a width;
   - a height;
   - a diameter;
   - a circumference; or
   - an area.
Embodiment 8: The method according to any one of the two preceding Embodiments, wherein the at least one surface attribute is selected from at least one of:
   - a texture;
   - a color; or
   - a polarization.
Embodiment 9: The method according to any one of the three preceding Embodiments, wherein the at least one parameter associated with the at least one object is selected from at least one of:
   - the geometric extension of at least one edge of the at least one object;
   - at least one of the geometric extension or the surface attribute of at least one element located on a surface of the at least one object;
   - a distance between at least two elements located on the surface of the at least one object;
   - at least one of the geometric extension or the surface attribute of at least one part comprised by the at least one object; or
   - a distance between at least two parts comprised by the at least one object.
Embodiment 10: The method according to the preceding Embodiment, wherein the at least one element located on the surface of the at least one object is selected from at least one of:
   - at least one label; or
   - at least one marking.
Embodiment 11: The method according to any one of the two preceding Embodiments, wherein the at least one part comprised by the at least one object is selected from at least one of:
   - at least one fixing element;
   - at least one groove; or
   - at least one protrusion.
Embodiment 12: The method according to any one of the preceding Embodiments, wherein the at least one existing database comprises construction information related to the at least one parameter associated with the at least one object. Embodiment 13: The method according to the preceding Embodiment, wherein the construction information comprises at least one value for at least one parameter associated with the at least one object. Embodiment 14: The method according to any one of the preceding Embodiments, wherein the at least one existing database is stored by at least one storage device which is located on at least one of
   - the camera; or
   - a remote location.
Embodiment 15: The method according to the preceding Embodiment, wherein the at least one storage device is accessible via at least one network, wherein at least one network is selected from at least one of
   - an in-house network; or
   - the internet.
Embodiment 16: The method according to any one of the preceding Embodiments, wherein calibrating the at least one camera comprises comparing the first information with the second information.
Embodiment 17: The method according to any one of the preceding Embodiments, wherein determining the first information about the at least one feature appearing in the at least one image comprises estimating at least one value of at least one picture element associated with the at least one feature.
Embodiment 18: The method according to the preceding Embodiment, wherein calibrating the at least one camera comprises comparing the at least one value of the at least one picture element associated with the at least one feature appearing in the at least one image with the at least one parameter associated with the at least one object identified in at least one image.
Embodiment 19: The method according to any one of the preceding Embodiments, further comprising the following step:
   d) capturing the at least one image picturing the at least one object by using the at least one camera,
Embodiment 20: The method according to the preceding Embodiment, wherein step d) is performed prior to step a).
Embodiment 21: The method according to any one of the preceding Embodiments, wherein the method is repeated by at least one of:
   - using at least one further object in at least one image captured by the at least one camera;
   - capturing at least one further image of the at least one object; or
   - assuming at least one further field of view for capturing at least one further image.
Embodiment 22: A computer program for calibrating at least one camera, wherein the computer program comprises instructions which, when the computer program is executed by a computer, cause the computer to carry out the method according to any of the preceding Embodiments.
Embodiment 23: A system for calibrating at least one camera, the system comprising:
   - at least one camera, wherein the at least one camera is configured to capture at least one image picturing at least one object; and
   - at least one processing device, wherein the at least one processing device is configured to:
      ∘ determine
         ▪ first information about at least one feature appearing in the at least one image; and
         ▪ second information about at least one parameter associated with the at least one object; and
      ∘ calibrate the at least one camera by using the first information and the second information,
   wherein the at least one processing device is further configured to acquire the second information by scanning at least one existing database for the at least one parameter associated with the at least one object.
Embodiment 24: The system according to the preceding Embodiment, further comprising at least one of:
   - at least one storage device configured to store the at least one existing database;
   - at least one communication interface configured to provide access to the at least one existing database;
   - a screen configured to display at least one item of information;
   - a distance meter configured to determine at least one distance between the at least one camera and the at least one object; or
   - a holding unit configured to hold the at least one camera.
Embodiment 25: The system according to the preceding Embodiment, wherein the at least one item of information comprises at least one of
   - at least one image;
   - the first information;
   - the second information; or
   - calibration information.
Embodiment 26: The system according to any one of the preceding system Embodiments, wherein the at least one camera fully or partially comprises at least one of:
   - the at least one processing device;
   - the at least one storage device;
   - at least one communication interface;
   - the at least one screen; or
   - the at least one distance meter.
Embodiment 27: The system according to any one of the preceding system Embodiments, wherein at least one of the at least one camera is comprised by a mobile communication device.
Embodiment 28: The system according to the preceding Embodiment, wherein the at least one camera is selected from at least one of
   - a rear camera; or
   - a front camera
   comprised by the mobile communication device.

### Short description of the Figures

Further optional features and embodiments of the present invention are disclosed in more detail in the subsequent description of preferred embodiments, preferably in conjunction with the dependent claims. Therein, the respective optional features may be implemented in an isolated fashion as well as in any arbitrary feasible combination, as the skilled person will realize. It is emphasized here that the scope of the invention is not restricted by the preferred embodiments. In the Figures:
- Figure 1: schematically illustrates a preferred embodiment of a system for calibrating at least one camera according to the present invention; and
- Figure 2: schematically illustrates a preferred embodiment of a method for calibrating at least one camera according to the present invention.

### Detailed description of the embodiments

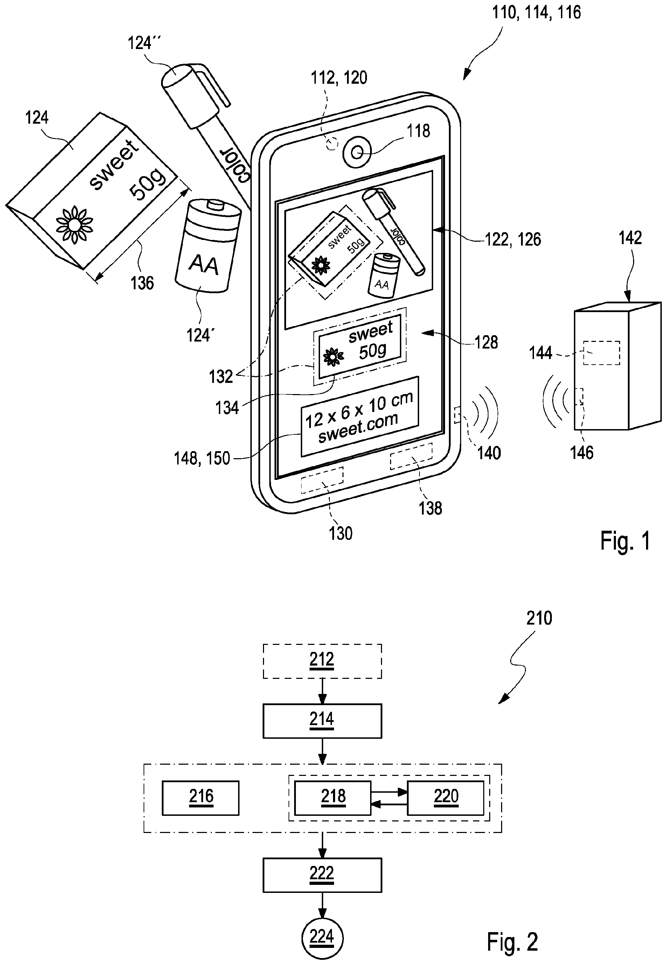

Figure 1 schematically illustrates a preferred embodiment of a system 110 for calibrating at least one camera 112 according to the present invention according to the present invention. In the illustration according to Figure 1 and in the following description, the system 110 is implemented - without limiting the generality of the invention - as a mobile communication device 114 in form of a smartphone 116. However, implementing the system 110 in form of a stand-alone camera or a different type of mobile communication device 114, in particular a tablet or a laptop, may also feasible.

Herein, the smartphone 116 comprises a front camera 118 and a rear camera 120, wherein, as depicted in Figure 1, the rear camera 120 corresponds to the camera 112 to be calibrated in accordance with the present invention. For further calibrating the front camera 118, the same procedure as described above and/or below in more detail may be applied using the front camera 118.

As schematically illustrated in Figure 1, the rear camera 120 of the smartphone 116 is configured to capture an image 122 which pictures the objects 124, 124', 124". As further depicted there, the image 122 picturing the objects 124, 124', 124" may, preferably, be displayed on a portion 126 of a screen 128 as comprised by the smartphone 116.

Further, the smartphone 116 comprises a processing device 130. According to the present invention, the processing device 130 is configured to determine first information about at least one feature appearing in the at least one image 122 and second information about at one or more parameters associated with one or more of the objects 124, 124', 124". For this purpose, a portion 132 of the image 122 which comprises a picture of the object 124 is extracted from the image 122 in this exemplary embodiment. As depicted there, a particular edge 134 of the object 124 may be used as the feature appearing in the at least one image 122 of the object 124, wherein the first information may indicate a number of pixels in the image 122 which represent the particular edge 134 of the object 124. Further, the second information may indicate a length 136 of the particular edge 134 of the object 124 as the one or more parameters associated with the object 124. Alternatively or in addition, a similar kind assignment can, be performed with respect to the other objects 124' and 124" (not depicted here).

According to the present invention, the processing device 130 is further configured to acquire a value for the length 136 of the particular edge 134 of the object 124 can by scanning one or more existing databases for the value for the length 136 of the particular edge 134 of the object 124 as the one or more parameters associated with the object 124. For this purpose, the smartphone 116 may, further, comprise an internal storage device 138 which may be configured to store an existing database comprising a value for the length 136 of the particular edge 134 of the object 124 as the second information comprising the one or more parameters associated with the object 124 and to provide the value, internally, to the processing device 130.

In a particularly preferred embodiment, the smartphone 116 may comprise an internal communication interface 140, especially a wireless interface, which may be configured to provide a request for access to an external server 142 for retrieving the second information. As further schematically depicted in Figure 1, the external server 142 may comprise a server communication interface 144, especially a wireless interface, configured to respond to the request and a server storage device 146 which may, alternatively or in addition, be configured to store an existing database comprising the value for the length 136 of the particular edge 134 of the object 124 as the second information comprising the one or more parameters associated with the object 124 to provide the value, internally, to the server communication interface 144, from where it can be transmitted, via the internal communication interface 140, to the processing device 130 of the smartphone 116. The external server 142 may be a local server or, preferably, a server accessible via internet, such as a remote server, specifically a cloud server.

As further schematically indicated in a further portion 148 of the screen 128 as comprised by the exemplary smartphone 116 of Figure 1, the second information can be comprised by construction information 150 that can be retrieved from the internal storage device 138 or, preferably from the server storage device 146 as comprised by the external server 142. As depicted there, the construction information may indicate the geometric extension of the object 124 in three dimensions and may, in addition, provide a weight of the object 124. However, further items of construction information may also be feasible. From the construction information 150 the desired value for the length 136 of the particular edge 134 of the object 124 can be retrieved as the second information comprising the one or more parameters associated with the object 124.

Further, the processing device 130 is configured to calibrate the camera 112, specifically the rear camera 120 of the smartphone 116, by using the first information and the second information. In the exemplary embodiment of Figure 1, calibrating the rear camera 120 may comprise comparing a number of adjacent pixels associated with the feature appearing in the portion 132 of the image 122 with the value for the of the particular edge 134 of the object 124 as identified in the portion 132 of the image 122 as retrieved from an existing database. In this fashion, a correspondence between 3D world positions as determined for the object 124 and the corresponding positions in the 2D image 122 can be obtained. This correspondence between the 3D world positions and the corresponding 2D image positions can be described by using a camera projection matrix; however, further manners of expressing this correspondence may also be feasible.

Alternatively or in addition, the one or more parameters associated with the one or more objects 124, 124', 124" may be selected from a further kind of geometric extension and/or from one or more surface attributes associated with the one or more objects 124, 124', 124" (not depicted here). As described above in more detail, the one or more surface attributes may be selected from a texture and/or a color, and/or a polarization. In particular, the one or more parameters associated with the one or more objects 124, 124', 124" may further be selected from one or more geometric extensions and/or surface attributes of one or more elements, such as one or more labels and/or one or more markings, such as one or more serial numbers, product identification codes or barcodes, that may be located on a surface of the one or more objects 124, 124', 124". Alternatively or in addition, the one or more parameters associated with the one or more objects 124, 124', 124" may further be selected from one or more geometric extensions and/or surface attributes of one or more parts that may be comprised by the one or more objects 124, 124', 124", such as one or more fixing elements and/or grooves and/or protrusions. As a further alternative or still in addition, the one or more parameters associated with the one or more objects 124, 124', 124" may further be selected from a distance between two or more of the elements and/or two or more of the parts. However, the one or more parameters may be selected from one or more further properties associated with the one or more objects 124, 124', 124".

Figure 2 schematically illustrates a preferred embodiment of a method 210 for calibrating one or more cameras 112 according to the present invention.

In an optional capturing step 212, the one or more images 122 picturing the one or more objects 124, 124', 124" may be captured by using the one or more cameras 112, specifically the rear camera 120 of the smartphone 116. However, one or more further cameras can also be used. Alternatively or in addition, the one or more images 122 picturing the one or more objects 124, 124', 124" can be retrieved from an existing database.

In an identifying step 214, one or more objects 124, 124', 124" are identified in the one or more images 122 as captured by the one or more cameras 112.

In a first determining step 216, the first information about the one or more features appearing in the one or more images 122 is determined.

In a second determining step 218, the second information about the one or more parameters associated with the one or more objects 124, 124', 124" is determined.

For this purpose, the second information is acquired in an acquiring sub-step 220 by scanning the one or more existing databases for the one or more parameters associated with the one or more objects 124, 124', 124".

In a calibrating step 222, the one or more cameras 112 is calibrated by using the first information and the second information. As a result, exact and highly reliable calibration information 224 can be obtained in this manner.

### List of Reference Signs

- 110: system for calibrating at least one camera
- 112: camera
- 114: mobile communication device
- 116: smartphone
- 118: front camera
- 120: rear camera
- 122: Image
- 124, 124'...: object
- 126: portion
- 128: screen
- 130: processing device
- 132: portion
- 134: edge
- 136: length
- 138: internal storage device
- 140: internal communication interface
- 142: external server
- 144: server communication interface
- 146: server storage device
- 148: portion
- 150: construction information
- 210: method for calibrating at least one camera
- 212: capturing (step)
- 214: identifying (step)
- 216: first determining (step)
- 218: second determining (step)
- 220: acquiring (sub-step)
- 222: calibrating (step)
- 224: calibration information

## Claims

1. A method (210) for calibrating at least one camera (112), the method (210) comprising the following steps:
a) identifying (214) at least one object (124, 124', 124") in at least one image (122) captured by the at least one camera (112);
b) determining (216, 218)
- first information about at least one feature appearing in the at least one image (122); and
- second information about at least one parameter associated with the at least one object (124, 124', 124"); and
c) calibrating (222) the at least one camera (112) by using the first information and the second information,
**characterized by**
acquiring (220) the second information by scanning at least one existing database for the at least one parameter associated with the at least one object (124, 124', 124").

2. The method (210) according to the preceding claim, wherein determining (218) the second information about the at least one parameter associated with the at least one object (124, 124', 124") comprises generating at least one model of the at least one object (124, 124', 124"), wherein the at least one model of the at least one object (124, 124', 124") comprises at least one parameter associated with the at least one object (124, 124', 124").

3. The method (210) according to any one of the preceding claims, wherein the at least one parameter associated with the at least one object (124, 124', 124") is selected from at least one of a geometric extension or a surface attribute associated with the at least one object (124, 124', 124").

4. The method according to the preceding claim, wherein the at least one surface attribute is selected from at least one of a texture, a color, or a polarization.

5. The method (210) according to any one of the two preceding claims, wherein the at least one parameter associated with the at least one object (124, 124', 124") is selected from at least one of:
- the geometric extension of at least one edge (134) of the at least one object (124, 124', 124");
- at least one of the geometric extension or the surface attribute of at least one element located on a surface of the at least one object (124, 124', 124");
- a distance between at least two elements located on the surface of the at least one object (124, 124', 124");
- at least one of the geometric extension or the surface attribute of at least one part comprised by the at least one object (124, 124', 124");
- a distance between at least two parts comprised by the at least one object (124, 124', 124").

6. The method (210) according to the preceding claim, wherein the at least one element located on the surface of the at least one object (124, 124', 124") is selected from at least one of a label or a marking, or wherein the at least one part comprised by the at least one object (124, 124', 124") is selected from at least one of a fixing element, a groove or a protrusion.

7. The method (210) according to any one of the preceding claims, wherein the at least one existing database comprises construction information (150) related to the at least one parameter associated with the at least one object (124, 124', 124"), wherein the construction information (150) comprises at least one value for the at least one parameter associated with the at least one object (124, 124', 124").

8. The method (210) according to any one of the preceding claims, wherein determining (216) the first information about the at least one feature appearing in the at least one image (122) comprises estimating at least one value of at least one picture element associated with the at least one feature, wherein calibrating (222) the at least one camera (112) comprises comparing the at least one value of the at least one picture element associated with the at least one feature appearing in the at least one image (122) with the at least one parameter associated with the at least one object (124, 124', 124") identified in at least one image (122).

9. The method (210) according to any one of the preceding claims, further comprising the following step:
d) capturing (212) the at least one image (122) picturing the at least one object (124, 124', 124") by using the at least one camera (112),
wherein step d) is performed prior to step a).

10. The method (210) according to any one of the preceding claims, wherein the method is repeated by at least one of:
- using at least one further object (124, 124', 124") in the at least one image (122) captured by the at least one camera (112);
- capturing (212) at least one further image of the at least one object (124, 124', 124");
- assuming at least one further field of view for capturing (212) at least one further image.

11. A computer program for calibrating at least one camera (112), wherein the computer program comprises instructions which, when the computer program is executed by a computer, cause the computer to carry out the method (210) for calibrating at least one camera (112), the method (210) comprising the following steps:
a) identifying (214) at least one object (124, 124', 124") in at least one image (122) captured by the at least one camera (112);
b) determining (216, 218)
- first information about at least one feature appearing in the at least one image (122); and
- second information about at least one parameter associated with the at least one object (124, 124', 124"); and
c) calibrating (222) the at least one camera (112) by using the first information and the second information,
**characterized by**
acquiring (220) the second information by scanning at least one existing database for the at least one parameter associated with the at least one object (124, 124', 124").

12. A system (110) for calibrating at least one camera (112), the system comprising:
- at least one camera (112), wherein the at least one camera (112) is configured to capture at least one image (122) picturing at least one object (124, 124', 124");
- at least one processing device (130), wherein the at least one processing device (130) is configured to:
∘ determine
▪ first information about at least one feature appearing in the at least one image (122); and
▪ second information about at least one parameter associated with at least one object (124, 124', 124"); and
∘ calibrate the at least one camera (112) by using the first information and the second information,
**characterized in**
**that** the at least one processing device (130) is further configured to acquire the second information by scanning at least one existing database for the at least one parameter associated with the at least one object (124, 124', 124").

13. The system (110) according to the preceding claim, further comprising at least one of:
- a storage device (138, 146) configured to store the at least one existing database;
- a communication interface (140, 144) configured to provide access to the at least one existing database;
- a screen (128) configured to display at least one item of information;
- a distance meter configured to determine at least one distance between the at least one camera (112) and the at least one object (124, 124', 124");
- a holding unit configured to hold the at least one camera (112).

14. The system (110) according to the preceding claim, wherein the at least one camera (112) fully or partially comprises at least one of:
- the at least one processing device (130);
- the at least one storage device (138);
- at least one communication interface (140);
- the at least one screen (128);
- the at least one distance meter.

15. The system (110) according to any one of the preceding system claims, wherein at least one of the at least one camera (110) is comprised by a mobile communication device (114), wherein the at least one camera (112) is selected from at least one of a front camera (118) or a rear camera (120) comprised by the mobile communication device (114).
